(19) Europäisches Patentamt
European Patent Office
Office européen des brevets

(11) **EP 4 737 509 A1**

(12) **EUROPEAN PATENT APPLICATION**
published in accordance with Art. 153(4) EPC

(43) Date of publication:
**06.05.2026 Bulletin 2026/19**

(21) Application number: **23943594.4**

(22) Date of filing: **27.06.2023**

(51) International Patent Classification (IPC):
*C08J 11/10* (2006.01)

(52) Cooperative Patent Classification (CPC):
Y02W 30/62

(86) International application number:
**PCT/JP2023/023852**

(87) International publication number:
**WO 2025/004195 (02.01.2025 Gazette 2025/01)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **HONDA MOTOR CO., LTD.**
**Tokyo 105-8404 (JP)**

(72) Inventors:
• **HIRAOKA Shoko**
**Wako-shi, Saitama 351-0193 (JP)**

• **HIRAWAKI Satoshi**
**Wako-shi, Saitama 351-0193 (JP)**
• **MORI Kazuhiro**
**Wako-shi, Saitama 351-0193 (JP)**
• **BABA Tsuyoshi**
**Wako-shi, Saitama 351-0193 (JP)**
• **SUZUKI Shuta**
**Wako-shi, Saitama 351-0193 (JP)**

(74) Representative: **Weickmann & Weickmann**
**PartmbB**
**Postfach 860 820**
**81635 München (DE)**

(54) **DEPOLYMERIZATION METHOD AND DEPOLYMERIZATION APPARATUS**

(57) A depolymerization method for depolymerizing a synthetic resin into a raw material monomer includes the steps of: setting a target temperature in a flow-type reactor (13e) and a target residence time of the synthetic resin and a solvent having a weight ratio of 1.5 times or more relative to the synthetic resin in the flow-type reactor (13e), such that a yield of the raw material monomer is 70% or more; and supplying the synthetic resin and the solvent to the flow-type reactor (13e), such that a temperature in the flow-type reactor (13e) becomes the target temperature, a residence time of the synthetic resin and the solvent in the flow-type reactor (13e) becomes the target residence time, and a pressure in the flow-type reactor (13e) becomes 10 MPa or more.

*FIG. 1*

EP 4 737 509 A1

## Description

TECHNICAL FIELD

The present invention relates to a depolymerization method and a depolymerization apparatus for depolymerizing a synthetic resin into a raw material monomer.

BACKGROUND ART

As an effort to reduce waste, research and development on recycling of waste has been conducted. As this type of technology, conventionally, a method is known in which nylon 6, which is a synthetic resin (polymer), is depolymerized to ε-caprolactam, which is a raw material monomer (see, for example, Patent Literature 1). In the method described in Patent Literature 1, 15 parts by weight or less of an acidic substance is added to 100 parts by weight of nylon 6 (poly-ε-caprolactam) in waste, heat treatment is performed at 220 to 400°C to lower the solution viscosity, and a non-melted product is separated, then the poly-ε-caprolactam is depolymerized.

PRIOR ART DOCUMENTS

PATENT LITERATURES

Patent Document 1: Japanese Patent Application Laid-Open Publication No. 2001-294571

SUMMARY OF INVENTION

PROBLEM TO BE SOLVED BY THE INVENTION

However, in the method of adding an acidic substance as described in Patent Literature 1, chemical decomposition takes a long time, and therefore it is difficult to perform depolymerization rapidly.

MEANS FOR SOLVING THE PROBLEM

An aspect of the present invention is a depolymerization method for depolymerizing a synthetic resin into a raw material monomer, including the steps of: setting a target temperature in a flow-type reactor and a target residence time of the synthetic resin and a solvent having a weight ratio of 1.5 times or more relative to the synthetic resin in the flow-type reactor, such that a yield of the raw material monomer is 70% or more; and supplying the synthetic resin and the solvent to the flow-type reactor, such that a temperature in the flow-type reactor becomes the target temperature, a residence time of the synthetic resin and the solvent in the flow-type reactor becomes the target residence time, and a pressure in the flow-type reactor becomes 10 MPa or more.

Another aspect of the present invention is a depolymerization apparatus configured to depolymerize a synthetic resin into a raw material monomer, including: a flow-type reactor; a supply unit configured to supply the synthetic resin and a solvent to the flow-type reactor, such that a temperature in the flow-type reactor becomes a predetermined target temperature, a residence time of the synthetic resin and the solvent having a weight ratio of 1.5 times or more relative to the synthetic resin in the flow-type reactor becomes a predetermined target residence time, and a pressure in the flow-type reactor becomes 10 MPa or more; and a back pressure valve provided downstream of the flow-type reactor and set to a set pressure of 10 MPa or more. The target temperature and the target residence time are set in advance such that a yield of the raw material monomer is 70% or more.

EFFECTS OF THE INVENTION

According to the present invention, it is possible to rapidly perform depolymerization.

BRIEF DESCRIPTION OF DRAWINGS

[Fig. 1] A diagram schematically showing an example of an overall configuration of a depolymerization apparatus according to an embodiment of the present invention.
[Fig. 2] A diagram for explaining a relationship between a reaction time and a yield when a depolymerization reaction from PA6 to ε-caprolactam was performed using subcritical water.
[Fig. 3] A diagram for explaining an appropriate reaction condition when the depolymerization reaction from PA6 to ε-caprolactam is performed using the depolymerization apparatus in Fig. 1.

DESCRIPTION OF EMBODIMENTS

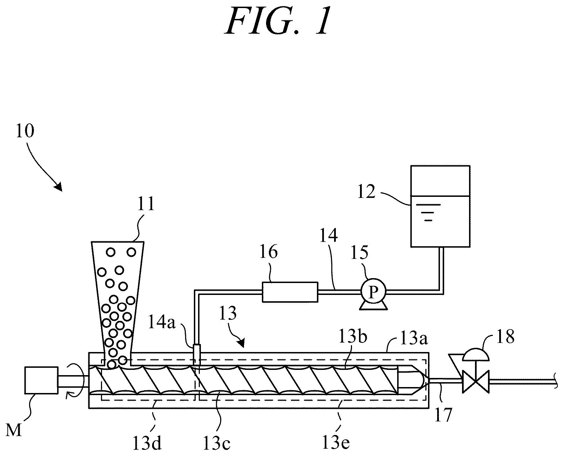

Hereinafter, an embodiment of the present invention will be described with reference to Figs. 1 to 3. In a depolymerization method and a depolymerization apparatus according to the embodiment of the present invention, a synthetic resin (polymer) is depolymerized into a raw material monomer. The synthetic resin is, for example, PA (polyamide) 6 (nylon 6), PA66 (nylon 66), PA12, PA11, PET (polyethylene terephthalate), PBT (polybutylene terephthalate), POM (polyacetal), a urethane resin, or the like. Hereinafter, an example will be described in which PA6, which is a synthetic resin, is depolymerized to ε-caprolactam, which is a raw material monomer.

When a synthetic resin such as PA6 is depolymerized into a raw material monomer for the purpose of industrial reuse, it is preferable to rapidly perform depolymerization from an industrial point of view. In this regard, in the present embodiment, the depolymerization method and the depolymerization apparatus are configured as follows such that a depolymerization reaction from the synthetic resin to the raw material monomer can be rapidly performed by using a solvent in a subcritical state.

Fig. 1 is a diagram schematically showing an example of an overall configuration of a depolymerization apparatus 10 according to the embodiment of the present invention. As illustrated in Fig. 1, the depolymerization apparatus 10 mainly includes a hopper 11 into which a PA6 pulverized material is charged, a tank 12 in which water as a solvent is stored, and an extruder 13.

The hopper 11 is configured as a metering hopper of a volumetric type, a loss-in-weight control type, or the like. The hopper 11 is connected to the upstream side of the extruder 13, and continuously supplies a certain amount of PA6 pulverized material into the extruder 13 according to a preset rotation rate or vibration frequency.

The tank 12 is connected to the extruder 13 on the downstream side of the hopper 11 via a pipe 14. The pipe 14 is provided with a pump 15 for pumping water at a preset flow rate and a heater 16 for heating water to a preset temperature (for example, 240°C or higher). The set flow rate of the pump 15 is set such that the weight of water supplied to the extruder 13 is 1.5 times or more, preferably 4 times or more the weight of PA6 supplied to the extruder 13. The pipe 14 is provided with a nozzle 14a at a tip on the extruder 13 side. The water stored in the tank 12 is pumped by the pump 15 through the pipe 14, heated by the heater 16, and injected into the extruder 13 through the nozzle 14a in a high-temperature and high-pressure state.

The extruder 13 is configured as a uniaxial or multiaxial screw extruder, and includes a steel cylinder 13a and a steel screw 13b inserted into the cylinder 13a. The PA6 pulverized material from the hopper 11 and the water from the tank 12 are supplied into a space 13c between the cylinder 13a and the screw 13b. A heater (not illustrated) is wound around the cylinder 13a, and the cylinder 13a is maintained at a preset reaction temperature by being heated by the heater as necessary. An inner diameter of the cylinder 13a is set to a predetermined value or less so that the temperature of PA6 and the water supplied to the space 13c becomes uniform. A motor M is connected to an upstream end of the screw 13b, and the screw 13b rotates at a preset rotation speed by being driven by the motor M. A pipe 17 is connected to a downstream end of the cylinder 13a, and a back pressure valve 18 is provided in the pipe 17.

When the screw 13b rotates, the PA6 pulverized material supplied to the space 13c is extruded toward the downstream side of the extruder 13. At this time, the PA6 pulverized material supplied from the hopper 11 is compressed and sheared by the screw 13b to generate heat, and is rapidly melted using shear heat as a main heat source and extruded while being plasticized. The space 13c from the hopper 11 to the nozzle 14a where the PA6 pulverized material is melted may be referred to as a "melting section 13d". A volume of the melting section 13d is set to a volume necessary for melting and plasticizing the PA6 pulverized material.

In the space 13c, water is injected from the nozzle 14a at the downstream end of the melting section 13d. The plasticized PA6 is stirred together with the water injected from the nozzle 14a by the rotation of the screw 13b, and is extruded toward the further downstream side of the extruder 13 while being mixed (kneaded). By heating the water injected from the nozzle 14a by the heater 16 to a sufficiently high temperature, resolidification of the plasticized PA6 can be prevented.

The space 13c downstream of the melting section 13d forms a reaction field in which PA6 and water are continuously supplied and a depolymerization reaction proceeds. The space 13c downstream of the melting section 13d where the depolymerization reaction is performed may be referred to as a "flow-type reactor 13e". In addition, the hopper 11, the screw 13b, and the motor M for supplying PA6 to the flow-type reactor 13e and the pump 15 for supplying water to the flow-type reactor 13e may be referred to as a "supply unit". A pressure (reaction pressure) in the flow-type reactor 13e is increased to the set pressure of the back pressure valve 18 by the rotation of the screw 13b as the upstream side of the flow-type reactor 13e is closed by the plasticized PA6.

The reaction pressure in the flow-type reactor 13e is maintained at a pressure slightly higher than the saturated vapor pressure of water. In addition, a temperature (reaction temperature) and the reaction pressure in the flow-type reactor 13e are maintained at subcritical conditions slightly lower than a critical point (374°C, 22.1 MPa) at which the state of water changes between liquid and gas. From such a viewpoint, the set pressure of the back pressure valve 18 is set to 10 MPa or more, preferably 13 MPa or more. In addition, the set pressure of the back pressure valve 18 is set to be equal to or lower than an upper limit pressure (for example, about 20 MPa) corresponding to pressure resistance performance of an apparatus. Accordingly, the water in the flow-type reactor 13e is maintained in the subcritical state, that is, the state of subcritical water which is a liquid. The subcritical water can hydrolyze a synthetic resin such as PA6, PA66, PA12, PA11, PET, PBT, POM, or a urethane resin to rapidly progress the depolymerization reaction.

The plasticized PA6 is stirred by the rotation of the screw 13b, mixed with the subcritical water, and brought into contact with the subcritical water, thereby being rapidly depolymerized to generate ε-caprolactam. A volume of the flow-type reactor 13e is set to a volume necessary for PA6 and subcritical water to be sufficiently mixed and brought into contact so that the depolymerization reaction proceeds. The screw 13b does not necessarily need to be disposed up to the downstream end of the flow-type reactor 13e as long as PA6 and subcritical water are sufficiently mixed in the flow-type reactor 13e.

By actively stirring and mixing PA6 and subcritical water, a required amount of the subcritical water can be reduced, and the entire apparatus can be downsized. In addition, by melting and plasticizing the PA6 pulverized material supplied from the hopper 11 in the melting section 13d and then supplying the resulting pulverized material to the flow-type reactor 13e, a time required for mixing PA6 and subcritical water can be shortened (about 15 minutes) as compared to a case where the pulverized material is supplied as it is to the flow-type reactor 13e.

When the reaction pressure in the flow-type reactor 13e exceeds the set pressure of the back pressure valve 18, the back pressure valve 18 is opened, and depolymerization liquid containing ε-caprolactam generated by the depolymerization reaction, unreacted PA6, and water is discharged to the outside through the pipe 17. The back pressure valve 18 closes immediately when the reaction pressure in the flow-type reactor 13e drops to the set pressure of the back pressure valve 18, but at this time, the reaction pressure in the flow-type reactor 13e may temporarily fall below the set pressure of the back pressure valve 18. When the reaction pressure in flow-type reactor 13e deviates from the subcritical condition of water, water is vaporized, so that the subcritical water required for the depolymerization reaction is insufficient, and thus, it is preferable that the set pressure of back pressure valve 18 is set higher than a desired reaction pressure by a predetermined pressure or more (for example, 0.5 MPa or more). In this case, in order to maintain the reaction pressure in flow-type reactor 13e at 10 MPa or more, preferably 13 MPa or more, the set pressure of back pressure valve 18 is set to 10.5 MPa or more, preferably 13.5 MPa or more.

A recovery apparatus for recovering ε-caprolactam from depolymerization liquid is provided at a subsequent stage of the depolymerization apparatus 10. The depolymerization liquid discharged from the depolymerization apparatus 10 to a normal pressure environment through the pipe 17 is separated into a solid component and a gas component. That is, water in the depolymerization liquid is vaporized by deviating from the subcritical condition. In the recovery apparatus, a solid component mainly containing ε-caprolactam and unreacted PA6 is recovered as it is, and a gas component (water) containing a trace amount of ε-caprolactam is collected, cooled, and recovered. The high-temperature solid component recovered by the recovery apparatus is kept warm for a predetermined period, whereby the unreacted PA6 is decomposed into ε-caprolactam by residual heat. The water recovered by the recovery apparatus is refluxed to the tank 12 of the depolymerization apparatus 10 and reused as a solvent for the depolymerization reaction.

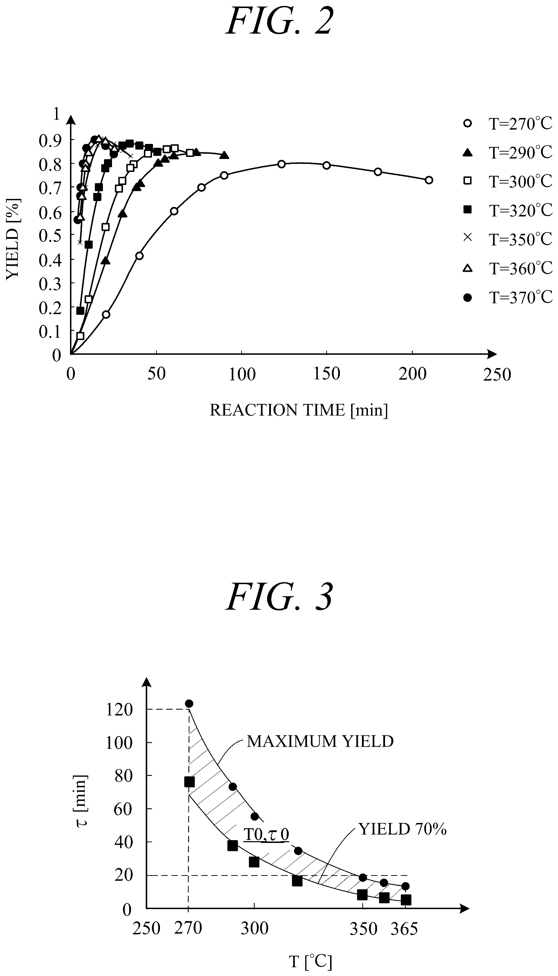

Fig. 2 is a diagram for explaining a relationship between a reaction time and a yield when the depolymerization reaction from PA6 to ε-caprolactam was performed using subcritical water, and shows test results of the yield for each reaction time when a reaction temperature T was changed in a range of 270°C to 370°C. As illustrated in Fig. 2, as the reaction temperature T is increased, the reaction time required until the yield is maximized can be shortened. When the reaction temperature T is 270°C or higher, a maximum yield can be achieved within 2 hours. When the reaction temperature T is 350°C or higher, the maximum yield can be achieved within 20 minutes.

Fig. 3 is a diagram for explaining an appropriate reaction condition when the depolymerization reaction from PA6 to ε-caprolactam is performed using the depolymerization apparatus 10 in Fig. 1. In the depolymerization apparatus 10 that continuously performs the depolymerization reaction, from an industrial point of view, it is preferable to suppress the reaction time of the depolymerization reaction, that is, a residence time $\tau$ of PA6 and subcritical water in the flow-type reactor 13e to at most 2 hours, preferably 20 minutes. Therefore, as illustrated in Figs. 2 and 3, a target temperature T0 in the flow-type reactor 13e is set to 270°C or higher, preferably about 350°C. In addition, the target temperature T0 in the flow-type reactor 13e is set to be equal to or lower than an upper limit temperature (for example, about 365°C) corresponding to the heat resistance performance of the apparatus.

A target residence time $\tau 0$ of PA6 and subcritical water in the flow-type reactor 13e is set according to the target temperature T0 in the flow-type reactor 13e, such that the yield of ε-caprolactam is 70% or more and the maximum yield or less. When the residence time $\tau$ is excessively short, the yield of ε-caprolactam is insufficient, but even when the residence time $\tau$ is excessively long, ε-caprolactam is further over-decomposed to reduce molecular weight, so that the yield is rather reduced. In consideration of this point, the target temperature T0 in the flow-type reactor 13e and the target residence time $\tau 0$ of PA6 and subcritical water in the flow-type reactor 13e are set to satisfy following Expressions (i) and (ii). That is, the target temperature T0 and the target residence time $\tau 0$ are set so as to be within a range defined by Expressions (i) and (ii) with Expression (i) as a lower limit and Expression (ii) as an upper limit.

$$\tau 0 \geq 43200 e^{\wedge}(-0.0244 T0) \qquad (i)$$

$$\tau 0 \leq 31800 e^{\wedge}(-0.0211 T0) \qquad (ii)$$

Expression (i) is an approximate expression based on the test result of the reaction time at which the yield of ε-caprolactam is 70% when the reaction temperature T is changed in a range of 270°C to 365°C. By setting the target temperature T0 and the target residence time $\tau 0$ so as to satisfy Expression (i), the yield of ε-caprolactam can be 70% or more. Similarly, Expression (ii) is an approximate expression based on the test result of the reaction time at which the yield of ε-caprolactam is maximized when the reaction temperature T is changed in the range of 270°C to 365°C. By setting the target temperature T0 and the target residence time $\tau 0$ so as to satisfy Expression (ii), the yield of $\varepsilon$-caprolactam can be maximized. Note that under a condition of $\tau 0 > 31800e^{\wedge}(-0.0211T0)$, the yield rather decreases due to over-decomposition of $\varepsilon$-caprolactam. In a case where the target temperature T0 is set to about 350°C, the target residence time $\tau 0$ satisfying Expressions (i) and (ii) is about 10 to 20 minutes.

The reaction temperature T in the flow-type reactor 13e can be adjusted via the set temperature of the heater that heats the cylinder 13a, the rotation rate (or vibration frequency) of the hopper 11, and the rotation speed of the motor M that drives the screw 13b. Similarly to the melting section 13d, PA6 in the flow-type reactor 13e also generates heat by being compressed and sheared by the rotation of the screw 13b, and the temperature of PA6 is raised using shear heat as a part of the heat source. Therefore, the reaction temperature T in the flow-type reactor 13e can be adjusted not only via the set temperature of the heater that heats the cylinder 13a but also via the rotation rate of the hopper 11 that defines the supply amount of PA6 and the rotation speed of the motor M that defines the shearing speed of PA6 by the screw 13b.

The residence time $\tau$ of PA6 and subcritical water in the flow-type reactor 13e can be adjusted via the rotation rate of the hopper 11 and the rotation speed of the motor M that drives the screw 13b. Alternatively, the length of the flow-type reactor 13e may be adjusted by adjusting the length of the extruder 13 (cylinder 13a), thereby adjusting the residence time $\tau$.

The reaction pressure in the flow-type reactor 13e can be adjusted via the set pressure of the back pressure valve 18, the set temperature of the heater that heats the cylinder 13a, the rotation rate of the hopper 11, and the rotation speed of the motor M that drives the screw 13b.

The hopper 11, the screw 13b, and the motor M, which are a supply unit that supplies PA6 to the flow-type reactor 13e, are set and adjusted such that the reaction temperature T in the flow-type reactor 13e is the target temperature T0, the residence time $\tau$ is the target residence time $\tau 0$, and the reaction pressure is 10 MPa or more, preferably 13 MPa or more. In addition, the set flow rate of the pump 15, which is a supply unit that supplies water to the flow-type reactor 13e, is set according to the rotation rate of the hopper 11 that defines the supply amount of PA6, such that the weight of water supplied to the flow-type reactor 13e is 1.5 times or more, preferably 4 times or more the weight of PA6.

According to the present embodiment, the following operations and effects are achievable.

(1) A depolymerization method that depolymerizes PA6 into $\varepsilon$-caprolactam includes: a step of setting a target temperature T0 in a flow-type reactor 13e and a target residence time $\tau 0$ of PA6 and subcritical water having a weight ratio of 1.5 times or more relative to PA6 in the flow-type reactor 13e, such that a yield of $\varepsilon$-caprolactam is 70% or more; and a step of supplying PA6 and water to the flow-type reactor 13e, such that a reaction temperature T in the flow-type reactor 13e becomes the target temperature T0, a residence time $\tau$ of PA6 and subcritical water in the flow-type reactor 13e becomes the target residence time $\tau 0$, and a reaction pressure in the flow-type reactor 13e becomes 10 MPa or more. By continuously performing depolymerization requiring a high temperature and a high pressure using the flow-type reactor 13e, it is possible to reduce a time required for temperature rise and fall of the reactor and to rapidly perform depolymerization. In addition, it is possible to reduce energy consumption required for the temperature rise and fall of the reactor and to efficiently perform depolymerization.

(2) In the setting step, the target temperature T0 and the target residence time $\tau 0$ are set so as to be within a range defined by Expressions (i) and (ii). By setting the target temperature T0 and the target residence time $\tau 0$ so as to satisfy Expression (i), the yield of $\varepsilon$-caprolactam can be 70% or more. In addition, by setting the target temperature T0 and the target residence time $\tau 0$ so as to satisfy Expression (ii), the yield of $\varepsilon$-caprolactam can be maximized.

(3) In the setting step, the target temperature T0 is set to about 350°C, and the target residence time $\tau 0$ is set to a time within a range of 10 minutes or more and 20 minutes or less. In this case, depolymerization can be rapidly performed within a heat-resistant temperature range of the apparatus.

(4) In the supplying step, PA6 and water are supplied to the flow-type reactor 13e, so that the water in flow-type reactor 13e is maintained in a subcritical state. That is, PA6 and water are supplied to flow-type reactor 13e so as to be maintained in the subcritical state where the temperature and the pressure are slightly lower than the critical point, which is a limit value when the state of water changes from liquid to gas. By maintaining water in the subcritical state, the reaction rate of the depolymerization reaction can be increased, and depolymerization can be rapidly performed.

(5) A depolymerization apparatus 10 that depolymerizes PA6 into $\varepsilon$-caprolactam includes: a flow-type reactor 13e; a supply unit (hopper 11, screw 13b, motor M, pump 15) that supplies PA6 and water to the flow-type reactor 13e, such that a reaction temperature T in the flow-type reactor 13e becomes a target temperature T0 set in advance, a residence time $\tau$ of PA6 and subcritical water having a weight ratio of 1.5 times or more relative to PA6 in the flow-type reactor 13e becomes a target residence time $\tau 0$ set in advance, and a reaction pressure in the flow-type reactor 13e becomes 10 MPa or more; and a back pressure valve 18 that is provided downstream of the flow-type reactor 13e and is set to a set pressure of 10 MPa or more (Fig. 1). The target temperature T0 and the target residence time τ0 are set in advance such that the yield of ε-caprolactam is 70% or more. This makes it possible to continuously perform depolymerization requiring a high temperature and a high pressure, and to reduce the time required to the temperature rise and fall of the reactor and to rapidly perform depolymerization. In addition, it is possible to reduce energy consumption required for the temperature rise and fall of the reactor and to efficiently perform depolymerization.

(6) The depolymerization apparatus 10 further includes: a melting section 13d that is provided upstream of the flow-type reactor 13e and melts PA6 to extrude the melted PA6 into the flow-type reactor 13e (Fig. 1). Accordingly, PA6 in a molten state can be supplied to the flow-type reactor 13e, and depolymerization can be rapidly performed in the flow-type reactor 13e.

(7) The depolymerization apparatus 10 further includes: a screw 13b that stirs PA6 and subcritical water supplied to the flow-type reactor 13e by the supply unit (Fig. 1). By actively stirring and mixing PA6 and subcritical water, a required amount of the subcritical water can be reduced, and the entire apparatus can be downsized.

(8) The depolymerization apparatus 10 further includes: an extruder 13 that melts PA6 to extrude the melted PA6 into the flow-type reactor 13e and stirs PA6 and subcritical water extruded into the flow-type reactor 13e (Fig. 1). That is, it is possible for the single extruder 13 to melt PA6, supply PA6 to the flow-type reactor 13e, stir and mix PA6 and subcritical water, and discharge ε-caprolactam obtained by depolymerization, so that the configuration of the entire apparatus can be simplified.

In the above embodiment, an example has been described in which the PA6 pulverized material is melted and plasticized in the melting section 13d and then supplied to the flow-type reactor 13e, but the synthetic resin supplied to the flow-type reactor is not limited to the melted and plasticized material. In addition, also in a case where the melted and plasticized synthetic resin is supplied to the flow-type reactor, the present invention is not limited to melting and plasticizing in the extruder 13 as in the above embodiment, and an apparatus that melts and plasticizes the synthetic resin may be provided at a preceding stage of the extruder 13. In this case, waste such as glass fiber reinforced plastic may be melted and plasticized, and glass fiber and other foreign matters may be removed and then supplied to the flow-type reactor.

In the above embodiment, an example has been described in which PA6 is depolymerized as a synthetic resin, but the present invention can also be applied to hydrolyzable synthetic resins such as PA66, PA12, PA11, PET, PBT, POM, and a urethane resin. In addition, in the above embodiment, an example has been described in which subcritical water is used as a solvent, but subcritical methanol or the like may be used.

In the above embodiment, an example has been described in which the uniaxial screw extruder 13 in Fig. 1 and the like is used, but the flow-type reactor in which the depolymerization reaction is performed is not limited to the space 13c between the cylinder 13a and the screw 13b of the screw extruder 13. In addition, an example has been described in which the synthetic resin and the solvent are stirred using the screw 13b, but a stirring blade is not limited to such a configuration.

The above description is only an example, and the present invention is not limited to the above embodiments and modifications, unless impairing features of the present invention. The above embodiment can be combined as desired with one or more of the above modifications. The modifications can also be combined with one another.

DESCRIPTION OF REFERENCE SIGNS

10 depolymerization apparatus, 11 hopper, 12 tank, 13 extruder, 13a cylinder, 13b screw, 13c space, 13d melting section, 13e flow-type reactor, 14 pipe, 14a nozzle, 15 pump, 16 heater, 17 pipe, 18 back pressure valve , M motor

**Claims**

1. A depolymerization method for depolymerizing a synthetic resin into a raw material monomer, comprising the steps of:

   setting a target temperature in a flow-type reactor and a target residence time of the synthetic resin and a solvent having a weight ratio of 1.5 times or more relative to the synthetic resin in the flow-type reactor, such that a yield of the raw material monomer is 70% or more; and
   supplying the synthetic resin and the solvent to the flow-type reactor, such that a temperature in the flow-type reactor becomes the target temperature, a residence time of the synthetic resin and the solvent in the flow-type reactor becomes the target residence time, and a pressure in the flow-type reactor becomes 10 MPa or more.

2. The depolymerization method according to claim 1, wherein

   the synthetic resin is a nylon 6, wherein
   the raw material monomer is a ε-caprolactam, wherein
   in the setting, the target temperature and the target residence time are set so as to be within a range defined by the following two equations:

$$(i) \quad \tau \geq 43200e^{\wedge}(-0.0244T);$$

and

$$(ii) \quad \tau \leq 31800e^{\wedge}(-0.0211T),$$

where T is the target temperature and $\tau$ is the target residence time.

3. The depolymerization method according to claim 2, wherein
in the setting, the target temperature is set to 350°C.

4. The depolymerization method according to claim 2, wherein
in the setting, the target residence time is set to a time within a range of 10 minutes or more and 20 minutes or less.

5. The depolymerization method according to claim 1, wherein
in the supplying, the synthetic resin and the solvent are supplied to the flow-type reactor, so that the solvent in the flow-type reactor is maintained in a subcritical state.

6. A depolymerization apparatus configured to depolymerize a synthetic resin into a raw material monomer, comprising:

a flow-type reactor;
a supply unit configured to supply the synthetic resin and a solvent to the flow-type reactor, such that a temperature in the flow-type reactor becomes a predetermined target temperature, a residence time of the synthetic resin and the solvent having a weight ratio of 1.5 times or more relative to the synthetic resin in the flow-type reactor becomes a predetermined target residence time, and a pressure in the flow-type reactor becomes 10 MPa or more; and
a back pressure valve provided downstream of the flow-type reactor and set to a set pressure of 10 MPa or more, wherein
the target temperature and the target residence time are set in advance such that a yield of the raw material monomer is 70% or more.

7. The depolymerization apparatus according to claim 6, further comprising:
a melting section provided upstream of the flow-type reactor and configured to melt the synthetic resin to extrude the melted synthetic resin into the flow-type reactor.

8. The depolymerization apparatus according to claim 6, further comprising
a stirring blade configured to stir the synthetic resin and the solvent supplied to the flow-type reactor by the supply unit.

9. The depolymerization apparatus according to claim 6, further comprising:
a screw extruder configured to melt the synthetic resin to extrude the melted synthetic resin into the flow-type reactor and configured to stir the synthetic resin and the solvent extruded into the flow-type reactor.

# FIG. 1

## FIG. 2

## FIG. 3

## INTERNATIONAL SEARCH REPORT

| International application No. |
|---|
| **PCT/JP2023/023852** |

**A. CLASSIFICATION OF SUBJECT MATTER**

***C08J 11/10***(2006.01)i

FI: C08J11/10

According to International Patent Classification (IPC) or to both national classification and IPC

**B. FIELDS SEARCHED**

Minimum documentation searched (classification system followed by classification symbols)

C08J11/10; C08J11/14; C07D201/12

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2022-143665 A (HONDA MOTOR CO., LTD.) 03 October 2022 (2022-10-03) | 1-9 |
| Y | claims, paragraphs [0010]-[0017], [0028]-[0049], fig. 1 | 6-9 |
| X | WO 2023/074441 A1 (TORAY INDUSTRIES, INC.) 04 May 2023 (2023-05-04) | 1-5 |
| Y | claims, paragraphs [0001], [0021]-[0027], examples 1-5, 8-16 | 6-9 |
| A | JP 2004-323374 A (TEIJIN LIMITED) 18 November 2004 (2004-11-18) entire text | 1-9 |
| A | JP 2004-277513 A (MATSUSHITA ELECTRIC WORKS, LTD.) 07 October 2004 (2004-10-07) entire text | 1-9 |
| A | US 5457197 A (ALLIEDSIGNAL INC.) 10 October 1995 (1995-10-10) entire text | 1-9 |

✓ Further documents are listed in the continuation of Box C.       ✓ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **01 August 2023** | **15 August 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT

International application No.

**PCT/JP2023/023852**

### C. DOCUMENTS CONSIDERED TO BE RELEVANT

| Category* | Citation of document, with indication, where appropriate, of the relevant passages | Relevant to claim No. |
|---|---|---|
| A | US 5869654 A (ALLIEDSIGNAL INC.) 09 February 1999 (1999-02-09)<br>    entire text | 1-9 |

Form PCT/ISA/210 (second sheet) (January 2015)

## INTERNATIONAL SEARCH REPORT
### Information on patent family members

International application No.

**PCT/JP2023/023852**

| Patent document cited in search report | | | Publication date (day/month/year) | Patent family member(s) | | | Publication date (day/month/year) |
|---|---|---|---|---|---|---|---|
| JP | 2022-143665 | A | 03 October 2022 | US | 2022/0306828 | A1 | |
| | | | | claims, paragraphs [0014]-[0034], [0060]-[0098], fig. 1 | | | |
| | | | | CN | 115106048 | A | |
| WO | 2023/074441 | A1 | 04 May 2023 | (Family: none) | | | |
| JP | 2004-323374 | A | 18 November 2004 | (Family: none) | | | |
| JP | 2004-277513 | A | 07 October 2004 | (Family: none) | | | |
| US | 5457197 | A | 10 October 1995 | EP | 676394 | A1 | |
| US | 5869654 | A | 09 February 1999 | US | 5948908 | A | |
| | | | | WO | 1997/034868 | A1 | |
| | | | | EP | 892782 | A1 | |
| | | | | CA | 2248686 | A1 | |

Form PCT/ISA/210 (patent family annex) (January 2015)

**EP 4 737 509 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001294571 A